# EUROPÄISCHE PATENTSCHRIFT

(11) **EP 3 308 477 B1**
(45) Veröffentlichungstag und Bekanntmachung des Hinweises auf die Patenterteilung: **22.04.2020**
(21) Anmeldenummer: 16787907.1
(22) Anmeldetag: 28.10.2016
(51) Int. Cl.: H04B 10/118, H04B 10/516

(54) **SENDER FÜR EIN OPTISCHES FREISTRAHL-KOMMUNIKATIONS-SYSTEM**
TRANSMITTER FOR AN OPTICAL FREE-BEAM COMMUNICATION SYSTEM
ÉMETTEUR POUR UN SYSTÈME DE COMMUNICATION OPTIQUE EN ESPACE LIBRE

(30) Priorität: 30.10.2015 DE 102015221283
(43) Veröffentlichungstag der Anmeldung: 18.04.2018
(73) Patentinhaber: Deutsches Zentrum für Luft- und Raumfahrt e.V., 51147 Köln (DE)
(72) Erfinder: MATA CALVO, Ramon, 81543 München (DE); GIGGENBACH, Dirk, 86932 Pürgen (DE); FUCHS, Christian, 80637 München (DE); AHMAD, Mustafa, Seefeld 82229 (DE)
(74) Vertreter: dompatent von Kreisler Selting Werner - Partnerschaft von Patent- und Rechtsanwälten mbB
(86) Internationale Anmeldenummer: PCT/EP2016/076135
(87) Internationale Veröffentlichungsnummer: WO 2017/072323

(56) Entgegenhaltungen:
- EP-A2- 0 718 989
- US-A1- 2005 231 783
- US-A1- 2011 116 805
- US-A1- 2011 286 749
- US-A1- 2012 008 961
- BRUNO W M ET AL: "Diode laser spatial diversity transmitter", PROCEEDINGS OF THE SPIE - THE INTERNATIONAL SOCIETY FOR OPTICAL ENGINEERING,, Bd. 1044, 16. Januar 1989 (1989-01-16), Seiten 187-194, XP009107951,
- HUNG-CHANG CHIEN: "Optical independent-sideband modulation forbandwidth-economic coherent transmission", OPTICAL EXPRESS, Bd. 22, Nr. 8, 205425, 11. April 2014 (2014-04-11), Seiten 9465-9470, XP002765297, DOI: 10.1364/OE.22.009465
- KUDIELKA K ET AL: "Transparent Optical Intersatellite Link Using Double-Sideband Modulation and Homodyne Reception", AEU - INTERNATIONAL JOURNAL OF ELECTRONICS AND COMMUNICATIONS, ELSEVIER, AMSTERDAM, NL, Bd. 56, Nr. 4, 1. Januar 2002 (2002-01-01) , Seiten 254-260, XP004959677, ISSN: 1434-8411, DOI: 10.1078/1434-8411-54100105

## Beschreibung

Geostationäre (GEO) Kommunikationssatelliten benötigen große Datenraten im Up-Link, um die zu übertragenden Daten vom Boden-Gateway zum Satelliten zu bringen. Von dort werden sie über Funk-Transponder als Kommunikationssignal zu den Nutzern am Boden übertragen. Diese Funkverbindungen zwischen Bodenstation und GEO (sog. GEO-Feeder-Link, GFL) müssen dabei immer hochratiger werden, um die Anforderungen der Systeme zu erfüllen. Gleichzeitig wird das verfügbare Frequenzspektrum immer knapper. Eine Lösung dieses Problems besteht darin, von Mikrowellen-(Funk) Verbindungstechnik zu optischem Richtfunk zu wechseln.

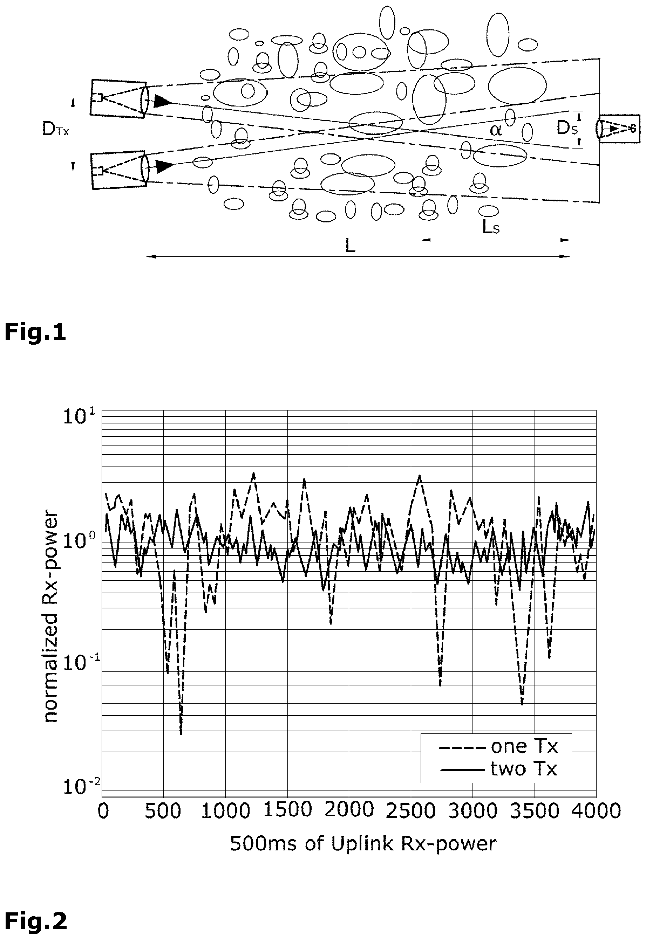

Informationen zu den genannten Technologien, die aus dem Stand der Technik bekannt sind, können den folgenden Veröffentlichungen entnommen werden:
[1] L.C. Andrews and R- Phillips, "Beam Propagation in Turbulent Media", SPIE-Press
[2] Mata-Calvo et al., "Transmitter diversity verification on ARTEMIS geostationary satellite", SPIE-Photonics West 2014
[3] http://www.fiberdyne.com/products/itu-grid.html
[4] Mike Sieben, Jan Conradi and David E. Dodds, "Optical Single Sideband Transmission at 10 Gb/s Using Only Electrical Dispersion Compensation", JOURNAL OF LIGHTWAVE TECHNOLOGY, VOL. 17, NO. 10, OCTOBER 1999
[5] S. Granieri, A. Siahmakoun and D. Thelen, "Optical modulation with a single sideband and carrier suppresses", SPIE, 2003
[6] M. A. Violas and Rüben de Sousa, Optical Single Side Band Modulator based on dual arm MZM and applications, IEEE Microwave Symposium (MMS), 2009
[7] Ui-Soo Lee, Hyun-Do Jung and Sang-Kook Han, "Optical Single Sideband Signal Generation Using Phase Modulation of Semiconductor Optical Amplifier", IEEE PHOTONICS TECHNOLOGY LETTERS, VOL. 16, NO. 5, May 2004
[8] US 2005/231783 A1
[9] BRUNO W M ET AL: "Diode laser spatial diversity transmitter", PROCEEDINGS OF THE SPIE - THE INTERNATIONAL SOCIETY FOR OPTICAL ENGINEERING, Bd. 1044, 16. Januar 1989 (1989-01-16), Seiten 187-194, XP009107951
[10] US 2011/116805 A1
[11] US 2002/008961 A1
[12] US 2011/286749 A1
[13] HUNG-CHANG CHIEN: "Optical independent-sideband modulation forbandwidth-economic coherent transmission", OPTICAL EXPRESS, Bd. 22, Nr. 8, 205425, 11. April 2014 (2014-04-11), Seiten 9465-9470, XP002765297
[14] KUDIELKA K ET AL: "Transparent Optical Intersatelite Link Using Double-Sideband Modulation and Homodyne Reception", AEU - INTERNATIONAL JOURNAL OF ELECTRONICS AND COMMUNICATIONS, ELSEVIER, AMSTERDAM, NL, Bd. 56, Nr. 4, 1. Januar 2002 (2002-01-01), Seite 254 - Seite 257; Abbildungen 1, 3, 4
[15] EP 0 718 989 A2

Im optischen Bereich gibt es keine regulatorische Spektrumsbeschränkung. Zudem ermöglichen optische Datenverbindungen - wie aus der terrestrischen Glasfasertechnik bekannt - erheblich höhere Datenraten (momentan bis 100 Gbps pro Kanal, was durch Wellenlängenmultiplex-Technik - DWDM - noch ca. verhundertfacht werden kann) [s. Veröffentlichung 3].

Optische GFLs (OGFL) werden allerdings durch die Atmosphäre gestört: Bewölkung über der optischen Bodenstation (Optical Ground Station, OGS) blockiert die Verbindung zum Satelliten. Diesem kann durch OGS-Diversität ausreichend begegnet werden.

Einen weiteren Atmosphäreneinfluss stellt die Brechungsindexturbulenz (BIT) dar, welche zu einer Störung der optischen Wellenfront führt und damit im weiteren Verlauf der Propagation zu Intensitätsschwankungen (Szintillationen) [s. Veröffentlichung 1]. Je nach Standort der OGS und Tageszeit, verwendeter Wellenlänge und Elevation des Links (Winkel zwischen Satellit, Bodenstation und Horizont) kann die BIT zu erheblichen Feldstörungen führen, womit das Signal beim GEO extrem stark schwankt. Je nach Übertragungsverfahren und BIT-Situation wird dadurch der Signalempfang stark gestört oder gar verhindert. Die Schwankungen wurden z.B. in Veröffentlichung [2] für ein konkretes Szenario nachgewiesen und quantifiziert. Die Empfangsleistungsschwankungen entstehen durch die Schwankungen in der Intensitätsverteilung beim Satelliten.

Das zeitliche Verhalten dieser Signalschwankungen wird durch die zeitliche Veränderung der Brechungsindexstruktur bedingt. Diese wird hauptsächlich durch den seitlichen Wind beeinflusst. Das bedeutet, dass typischerweise mit Fade-Dauern von 2 bis 20 ms zu rechnen ist. Derartige Fading-Ereignisse werden klassischerweise durch FEC (Forward Error Correction) -Algorithmen und durch ARQ (Automated Repeat Request) -Protokolle kompensiert, wodurch es aber zu prinzipiellen Verzögerungen von einem Mehrfachen der Fadingdauer kommt (in diesem Fall also etwas 100 ms) und zusätzliche Durchsatz-Verluste (durch den FEC-Overhead) in Kauf genommen werden müssen.

Ein Lösungsansatz zur Verringerung dieser Schwankungen besteht in der Transmitter-Diversität (Tx-Div): Es werden hierzu von der OGS zwei oder noch mehr (n_{Tx}) Sendestrahlen "Tx" parallel zum GEO abgestrahlt. Diese Strahlen propagieren durch verschiedene IRT-Volumina (die IRT-Strukturen müssen hierzu deutlich kleiner als der Tx-Abstand sein, was bei typischen Strukturgrößen im cm bis dm Bereich ab ca 1 m Tx-Abstand sehr gut gewährleistet ist). Beim Satelliten erzeugen sie damit mehrere statistisch unabhängige Intensitätsmuster. Wenn die bei den verschiedenen Transmittern verwendeten Wellenlängen unterschiedlich sind (Frequenzunterschied muss größer sein als die Bandbreite des Datenempfängers), so werden die Muster inkohärent überlagert, d.h. die Intensitäten addieren sich. Dies ist für einfache Intensitätsmodulationen / Direktempfangs-Systeme (IM/DD) meist generell der Fall. Hierdurch kommt es zu einem Ausgleich von Minima und Maxima, d.h. die relativen Schwankungen werden reduziert. Konkret ändert sich der Szintillationsindex SI zu SI(n) = SI(1)/n_{Tx}.

Transmitter-Diversität für IM/DD ist ein etabliertes Verfahren, dass bereits vielfach beschrieben und experimentell nachgewiesen wurde. Die grundsätzliche Funktionsweise ist in Figur 1 dargestellt. Hierbei sind zwei Sender im Abstand d_{Tx} voneinander positioniert und strahlen auf das gleiche Ziel. Die Strukturgröße der Turbulenzzellen ist kleiner als d_{Tx}. Hieraus resultieren unterschiedliche Intensitätsmuster, welche sich inkohärent addieren, wenn die Frequenzen der beiden Sender weit auseinander liegen.

Mit dieser relativ einfachen Technik der inkohärenten Tx-Diversität lassen sich die Empfangsleistungsschwankungen reduzieren. Insbesondere die Reduktion der Minima (also das Vermeiden von starken Fades) wirkt sich dabei sehr vorteilhaft aus. Das Empfangssignal wird damit stabilisiert. Die Technik wird auch bereits in experimentellen optischen Satelliten-Uplinks angewandt, z.B. in SILEX (Uplink von der ESA-OGS auf Teneriffa zum GEO Artemis der ESA - mit bis zu vier parallelen Sendestrahlen und im Experiment KIODO und KODEN in Uplinks zum japanischen Satelliten OICETS/Kirari der JAXA).

Ein Beispiel für einen am Satelliten gemessenen Empfangsleistungsvektor der Länge von 0,5 Sekunden ist in Figur 2 dargestellt. Hierbei wird ein Uplink einer optischen Bodenstation zu einem Empfänger an einem geostationären Satelliten einmal mit und einmal ohne Transmitter-Diversität betrachtet (gemessen im Projekt ArtemEx). Die durchgezogene Linie stellt ein mit einem Sender erzeugtes Signal dar, während die gestrichelte Linie ein mit zwei Sendern erzeugtes Signal darstellt. Dieses weist schwächere Fades und Surges auf und ist damit besser zur Datenübertragung geeignet.

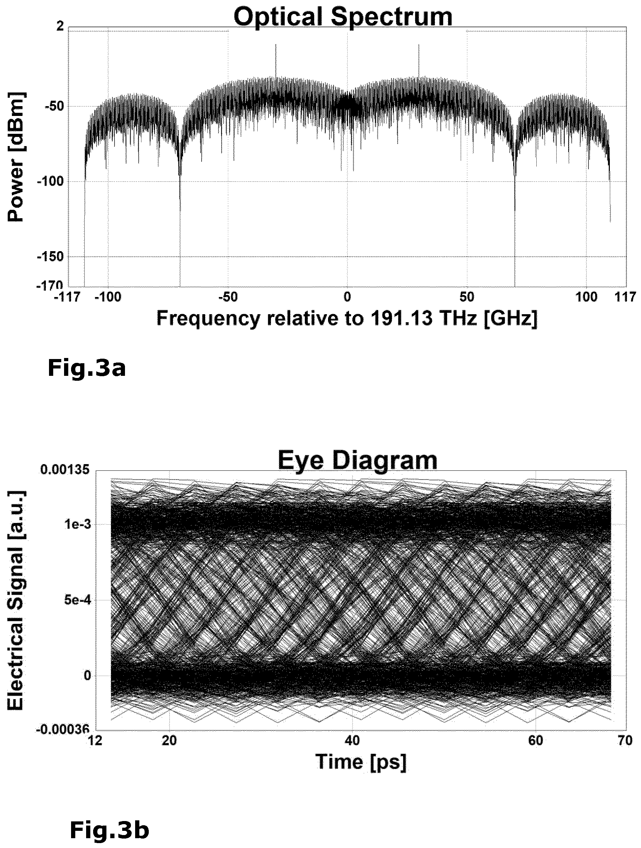

Beim Einsatz der Tx-Div bei inkohärenter aber sehr breitbandiger Übertragung mit IM/DD wird z.B. ein 40 Gbps IM/DD-Datenkanal über zwei (oder n) physikalisch getrennte DWDM-Kanäle abgestrahlt (oder in einem 100 GHz DWDM-Kanal) und es muss sichergestellt werden, dass sich die Spektren der beiden zu einem Datenkanal gehörigen Diversitätskanäle nicht überlappen (dies ist ebenso der Fall bei allen niederratigeren Übertragungen, wobei dort aber die spektrale Bandbreiteneffizienz irrelevant ist). Sollten sich die optischen Spektren überlappen, kommt es zu Störungen der Signalqualität (Übersprechen durch Mischen der überlappenden Spektralanteile mit schwebungsartigen Effekten im Teilbereich - siehe Fig. 3 rechts - das empfangene Signal wird dadurch je nach Grad der Überlappung schlechter bis unbrauchbar). Die Tx-Div erzwingt bei mehrkanaliger (DWDM) Übertragung daher, dass die benötigte optische Bandbreite ein Vielfaches der Datenrate beträgt (zur Vermeidung der Überlappung). Dies kann dazu führen, dass das verfügbare Spektrum insgesamt nicht ausreicht, um die geforderten Datenraten zu übertragen. Zum Beispiel benötigt ein 40 Gbps Datensignal zwei 100 GHz physikalische DWDM-Kanäle, also 200 GHz physikalische Bandbreite pro 40 Gbps effektive Nutzerdatenrate, was bei typischerweise technisch verfügbaren 32 DWDM Kanälen die Gesamtrate auf 640 Gbps beschränkt. Durch optimierte Filter und Demultiplexer könnten die Kanäle evtl. enger gelegt werden, die prinzipielle Beschränkung, dass bei Tx-Div ein Vielfaches der Bitrate benötigt wird, bleibt aber bestehen.

Aufgabe der Erfindung ist es, einen Sender für ein optisches Freistrahl-Kommunikationssystem bereitzustellen, der eine verbesserte Spektraleffizienz aufweist.

Die Lösung der Aufgabe erfolgt erfindungsgemäß durch die Merkmale des Anspruchs 1.

Der erfindungsgemäße Sender für ein optisches Freistrahl-Kommunikationssystem kann insbesondere für einen Daten-Uplink zu einem Satelliten verwendet werden und dient dem Aussenden eines Lichtsignals. Er umfasst zwei Lichtsender zur optischen Übermittlung des Datensignals unter Verwendung einer Einseitenbandmodulation, wobei jeder Lichtsender eine Seite der Bandmodulation ausstrahlt, so dass das beim Empfänger ankommende Signal einer Zweiseitenbandmodulation entspricht.

Einseitenbandmodulation ist ein bekanntes Modulationsverfahren, dass in der Funkkommunikation und der optischen Kommunikation verwendet wird und eine verbesserte Spektrumseffizienz und Energieeffizienz aufweist. In optischen Datenübertragungsverfahren wird Einseitenbandmodulation verwendet, um Interferenzen zu minimieren, die durch chromatische Dispersion und nicht lineare Effekte der optischen Kommunikationsphasen erzeugt werden (s. Veröffentlichung [4]). Eine Einseitenbandmodulation kann erzeugt werden durch Hilbert transformierte Daten mit einem Doppeltreiber, durch einen einzelnen Mach-Zehnder-Modulator (s. Veröffentlichung [4]), durch zwei Mach-Zehnder-Modulatoren (s. Veröffentlichung [5]) oder durch die Phasenmodulation eines optischen Halbleiter-Verstärkers (s. Veröffentlichung [7]). Ein kohärenter Empfänger wird üblicherweise verwendet, wenn der optische Träger unterdrückt wird (s. Veröffentlichung [4]).

Der Grundgedanke der Erfindung besteht somit darin, Zweifachtransmitter-Diversität mit einer Einseitenbandmodulation zu kombinieren. Jeder Sender strahlt eine Seite der Bandmodulation ab, so dass der Empfänger eine Zweiseitenbandmodulation empfängt, nämlich jedes Seitenband von jeweils einem Sender. Damit weist der erfindungsgemäße Sender dieselbe Bandbreite wie bei einer Zweiseitenbandmodulation auf. Die Erfindung ermöglicht eine effiziente Nutzbarmachung der Transmitter-Diversität auch für höchstratige DWDM-Übertragung mit IM/DD. Damit wird der Einsatz der DWDM-Übertragung für das wichtige Gebiet der optischen Geo Feeder-Links deutlich effizienter. Es wird keine optische Bandbreite mehr durch Transmitter-Diversität verbraucht. Die langfristig angestrebte Mulit-Terabit/s Übertragungskapazität wird ermöglicht.

Die Komplexität des Systems liegt in der Senderseite, wo die Einseitenmodulation erzeugt wird. Wie aus dem Stand der Technik bekannt ist, erzeugt eine Einseitenbandmodulation einen höheren technischen Aufwand. Da der Empfänger das Signal als Doppelseitenmodulation empfängt, ist hier keine komplexere Technik wie auf der Senderseite notwendig.

Die Senderdiversität besteht somit aus zwei Sendern, die in einem bestimmten Abstand zueinander angeordnet sind. Dieser Abstand zwischen den zwei Sendern muss größer sein als die Strukturgrößen der Turbulenzzellen der optischen Freiraumübertragung, so dass beim Sender unterschiedliche Intensitätsmuster, welche sich inkohärent agieren, ergeben. Beispielsweise können die beiden Sender einen halben Meter voneinander entfernt sein, so dass das Signal durch unterschiedliche atmosphärische Pfade übertragen wird. Beim Empfänger werden die beiden Signale kombiniert, so dass sich die Szintillation halbiert.

Es wird bevorzugt, dass das Empfängerterminal ausschließlich zur Demodulation eines Zweiseitenbandmodulationssignals ausgebildet ist.

Die Transmitter-Diversität ermöglicht neben der Verringerung der Schwankungen zusätzlich eine Erhöhung der gesamten abgestrahlten Leistung. Diese kann pro Transmitter-Teleskop z.B. aus technischen Gründen begrenzt sein (beispielsweise aufgrund der thermischen Belastbarkeit der Sendefaser oder sonstiger Bauteile oder aber der Augensicherheit des Übertragungssystems). Indem die Leistung auf mehrere Sender verteilt wird, kann diesen technischen Einschränkungen effizient begegnet werden.

Der erfindungsgemäße Sender kann insbesondere für einen Daten-Uplink zu einem Satelliten ausgehend von einer Bodenstation verwendet werden. Hierbei kann es sich um einen LEO- oder GEO-Satelliten handeln.

Weiterhin kann der erfindungsgemäße Sender in einem optischen Uplink zu einem Flugzeug/OAVs/HAPs ausgehend von einer optischen Bodenstation verwendet werden. Auch eine Boden-Boden-Kommunikation ist denkbar. Eine solche kann beispielsweise zur Anbindung von Gebäude-LANs ans Internet verwendet werden oder zur Anbindung von Mobilfunkbasisstationen. Weitreichende FSO-Links (bis 20 km) können zukünftig auch als Kommunikationsbackbones eingesetzt werden, insbesondere wenn das Fading-Problem beseitigt werden kann.

Weiterhin ist eine Anwendung in optischen Inter-HAP-Links möglich. Diese zukünftigen stratosphärischen Kommunikationsplattformen werden vorteilhafterweise durch optischen Richtfunk verbunden, wobei der Abstand von bis zu einigen 100 km eine Laufzeit mit sich bringt, die sich bei mehrmaliger Wiederholungsanforderung (ARQ) nachteilig auswirkt.

Der erfindungsgemäße Sender kann weiterhin für eine optische Übertragung von Frequenznormalen zur Synchronisation optischer Uhren verwendet werden.

Im Folgenden werden bevorzugte Ausführungsformen der Erfindung anhand von Figuren erläutert.

Es zeigen:
- Figur 1: die grundsätzliche Funktionsweise einer Transmitter-Diversität,
- Figur 2: einen beispielhaften am Satelliten empfangenen Empfangsleistungsvektor,
- Figur 3: Interferenzeffekte durch Überlappung der Signalspektren im Frequenzbereich,
- Figur 4: eine schematische Darstellung einer ersten Ausführungsform des erfindungsgemäßen Senders,
- Figur 5 und 6: Darstellung von Brechungsindexturbulenzen des erfindungsgemäßen Senders verglichen zum Stand der Technik.

Figuren 1 und 2 wurden bereits im Zusammenhang mit dem Stand der Technik erläutert.

Figur 3 zeigt Interferenzeffekte durch Überlappung der Signalspektren im Frequenzbereich. Auf der linken Seite ist eine schwache Überlappung zweier Signalspektren dargestellt. Auf der rechten Seite ist ein simulierter Effekt im Zeitbereich bei starker Überlappung dargestellt. Es ist sichtbar, dass Schwebungseffekte die "Augenöffnung" des digitalen Signalstroms verkleinern.

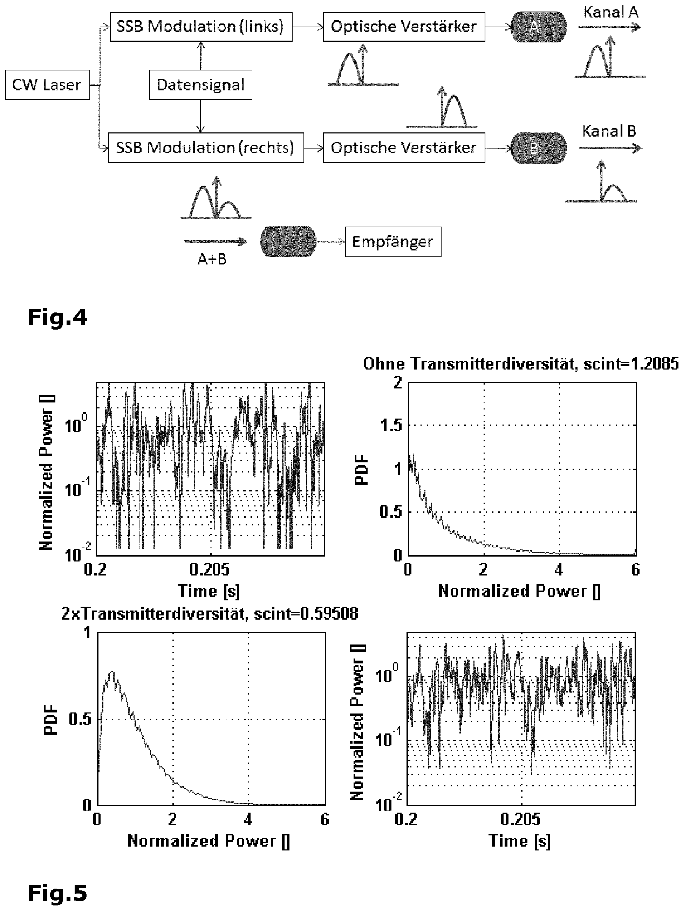

In Figur 4 ist ein Blockdiagram einer Ausführungsform des erfindungsgemäßen Senders (oben) und des Empfängers (unten) dargestellt. Es ist erkennbar, dass SSB-Signale für jede Apertur erzeugt werden. Kanal A und Kanal B führen zu unterschiedlichen Kanälen. Der Empfänger wird die Überlagerung der beiden Signale erhalten und muss deswegen nur eine Zweiseitenbandmodulation demodulieren. Die dargestellte Transmitter-Diversität hat dieselbe Bandbreite wie eine Zweiseitenbandmodulation.

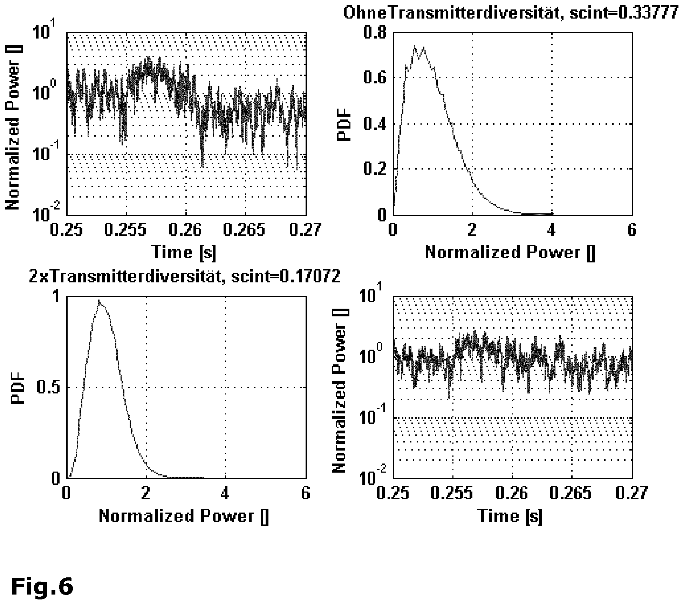

In Figuren 5 und 6 sind zwei Simulationen unter Verwendung des erfindungsgemäßen Senders dargestellt. Der Szintillationsparameter "scint" steht für die normierte Varianz der Empfangsleistung. Die beiden Graphen im oberen Teil der Figur zeigen die gemessene Leistungsvektoren in einer GEO-Uplink Laserübertragung (siehe Veröffentlichung 2). Links ist das gemessene Signal und rechts die Wahrscheinlichkeitsdichtefunktion dargestellt. Im unteren Bereich der Figur 5 wird das Transmitterdiversitätsverfahren simuliert durch Überlagerung des gemessenen Signals mit einer zeitlich verschobenen Version von sich selbst, damit jeder Kanal eine nicht korrelierte Version erhält. Im realen Anteil des Empfangssignals sind die modulierten Daten vorhanden.

Figur 5 stellt eine starke Brechungsindexturbolenz dar, wobei links oben das gemessene Uplink-Signal in einem GEO-Satelliten unter Verwendung eines Senders dargestellt ist, während oben rechts die Wahrscheinlichkeitsdichtefunktion der gemessenen Leistung in diesem Szenario dargestellt ist. Unten links ist die Wahrscheinlichkeitsdichtefunktion einer simulierten SSB Zwei-Transmitterdiversität berechnet vom gemessenen Signal dargestellt. Unten rechts ist das simulierte Signal mit SSB Transmitterdiversität berechnet vom gemessenen Signal dargestellt.

Figur 6 entspricht Figur 5, wobei hier eine schwache Brechungsindexturbolenz dargestellt ist.

Aufgrund des Zusammenhangs SI(n) = SI(1)/n_{Tx} wird erwartet, dass sich die Szintillation bei zwei Sendern halbieren wird. Das Ergebnis der Simulation gemäß Figur 5 und Figur 6 entspricht dieser Erwartung.

## Patentansprüche

1. Sender für ein optisches Freistrahl-Kommunikations-System, insbesondere für einen Daten-Uplink zu einem Satelliten, zum Aussenden eines Lichtsignals **gekennzeichnet durch**
zwei Lichtsender (14, 16) zur optischen Übermittlung eines Datensignals unter Verwendung einer Einseitenbandmodulation, wobei jeder Lichtsender eine Seite der Bandmodulation ausstrahlt, so dass das beim Empfänger ankommende Signal einer Zweiseitenbandmodulation entspricht,
wobei der Abstand zwischen den zwei Lichtsendern größer sein muss als die Strukturgrößen der Turbulenzzellen der optischen Freiraumübertragung.

## Claims

1. Transmitter for an optical free-beam communication system, in particular for a data uplink to a satellite, for sending a light signal
**characterized by**
two light transmitters (14, 16) for the optical transmission of a data signal using one single-sideband modulation, wherein each light transmitter emits one side of the band modulation so that the signal arriving at the receiver corresponds to a double-sideband modulation,
wherein the distance between the two light transmitters has to be greater than the structure sizes of turbulence cells in the optical free-space transmission.

## Revendications

1. Émetteur pour un système de communication optique en faisceau libre, en particulier pour une liaison de données montante vers un satellite, destiné à émettre un signal lumineux, **caractérisé par**
deux émetteurs de lumière (14, 16) permettant la transmission optique d'un signal de données en utilisant une bande latérale unique, dans lequel chaque émetteur de lumière émet un côté de la modulation de bande, de sorte que le signal arrivant au récepteur correspond à une bande latérale double,
dans lequel l'écart entre les deux émetteurs de lumière doit être supérieur aux tailles de structure des cellules de turbulences de la transmission optique en espace libre.
